# EUROPEAN PATENT APPLICATION

(11) **EP 4 059 661 A1**
(43) Date of publication of application: **21.09.2022**
(21) Application number: 22160499.4
(22) Date of filing: 07.03.2022
(51) Int. Cl.: B24B 7/06, B24B 7/17, B23Q 1/54

(54) **GRINDING APPARATUS**

(30) Priority: 18.03.2021 JP 2021044273
(71) Applicant: Asahi-Seiki Manufacturing Co., Ltd., Owariasahi-shi, Aichi 488-8655 (JP)
(72) Inventor: OBAYASHI, Eiji, Owariasahi-shi 488-8655 (JP); TAKAMATSU, Junichi, Owariasahi-shi 488-8655 (JP)
(74) Representative: Kramer Barske Schmidtchen Patentanwälte PartG mbB

(57) **Abstract**

In the grinding apparatus (10) of the present disclosure, a pair of second motors (52) for performing the grinding operation are fixed to a rotary base (40), and unlike a conventional grinding apparatus in which the pair of second motors (52) are fixed to a fixed base (18), a plurality of gears is not necessary, so that the manufacturing cost can be reduced. Further, since the pair of second motors (52) and a controller (70) are electrically connected through a slip ring (60), rotation of the rotary base (40) is not restricted by power cables (52L) of the second motors (52).

## Description

### BACKGROUND OF THE INVENTION

### (1) Field of the Invention

The present disclosure relates to a grinding apparatus that grinds upper and lower ends of a workpiece by causing the workpiece to pass through between a pair of rotary grindstones facing each other in the vertical direction.

### (2) Description of Related Art

In a conventionally known grinding apparatus of this type, a pair of workpiece supporting tables are supported on a rotary base, and each workpiece supporting table is provided with a plurality of workpiece accommodating holes at an outer edge part thereof. In this grinding apparatus, the rotary base is rotated by a first motor so that an any desired workpiece supporting table is disposed between the pair of rotary grindstones, and this workpiece supporting table is rotationally driven by a second motor so that workpieces in the plurality of workpiece accommodating holes are made to pass through between the pair of rotary grindstones, whereby the workpieces are ground (see, for example, FIGS. 1, 2, and 4 of JP 2018-34253 A).

### SUMMARY OF THE INVENTION

However, it is required to reduce a manufacturing cost of the above-described conventional grinding apparatus.

A grinding apparatus according to one aspect made to solve the above problem is a grinding apparatus that grinds an upper end and a lower end of a workpiece while causing the workpiece to pass through a pair of rotary grindstones facing each other in a vertical direction. The grinding apparatus includes: a rotary base that is rotationally driven around a first rotation axis parallel to the vertical direction; a rotary table included in the rotary base and having an upper surface flush with an upper surface of a lower grindstone of the pair of rotary grindstones; a fixed base that rotatably supports the rotary base; a fixed table that is included in the fixed base, surrounds the rotary table, has a cutout receiving part of the lower rotary grindstone, and has an upper surface flush with the upper surface of the lower rotary grindstone; a plurality of workpiece supporting tables which are supported at a plurality of positions, around the first rotation axis, on the rotary base and each of which is rotationally driven around a center that is one of a plurality of second rotation axes parallel to the first rotation axis, wherein when the center of one of the workpiece supporting tables is positioned between the first rotation axis and the pair of rotary grindstones, an outer edge part of the one of the workpiece supporting tables is disposed between the pair of rotary grindstones; a plurality of workpiece receiving holes vertically passing through the outer edge part of each of the workpiece supporting tables, each of the workpiece receiving holes configured to receive a middle part, in the vertical direction, of one of a plurality of the workpieces; a first motor that is fixed to the fixed base to rotationally drive the rotary table and has a rotational position sensor; a plurality of second motors that are fixed to the rotary base to rotationally drive the workpiece supporting tables, and have no rotational position sensor; a controller that drives the first motor and the plurality of second motors; and a slip ring that is disposed below the plurality of second motors and has a plurality of blushes and a plurality of conductive rings that are respectively fixed to the rotary base and the fixed base or respectively fixed to the fixed base and the rotary base and are in sliding contact with each other, the slip ring conductively connecting between the controller and the plurality of second motors.

### BRIEF DESCRIPTION OF THE DRAWINGS

FIG. 1 is a side view of a grinding apparatus according to an embodiment of the present disclosure;
FIG. 2 is a cross-sectional plan view of a workpiece transfer device on a cross-section along line A-A of FIG. 1;
FIG. 3 is a cross-sectional plan view of the grinding apparatus on a cross-section along line B-B of FIG. 1;
FIG. 4 is a cross-sectional side view of the workpiece transfer device;
FIG. 5 is a perspective view of a rotary frame;
FIG. 6 is a partially enlarged cross-sectional side view of a rotary grindstone and a workpiece supporting table;
FIG. 7 is a perspective view of a first speed reducer and a slip ring;
FIG. 8 is a cross-sectional side view of a central part of the workpiece transfer device;
FIG. 9 is a side view of a detection switch and a specific shape portion;
FIGS. 10A and 10B are plan views of the detection switch and the specific shape portion;
FIG. 11 is a block diagram illustrating an electrical configuration of a controller; and
FIG. 12 is a block diagram illustrating a control configuration of the controller.

### DETAILED DESCRIPTION OF PREFERRED EMBODIMENTS

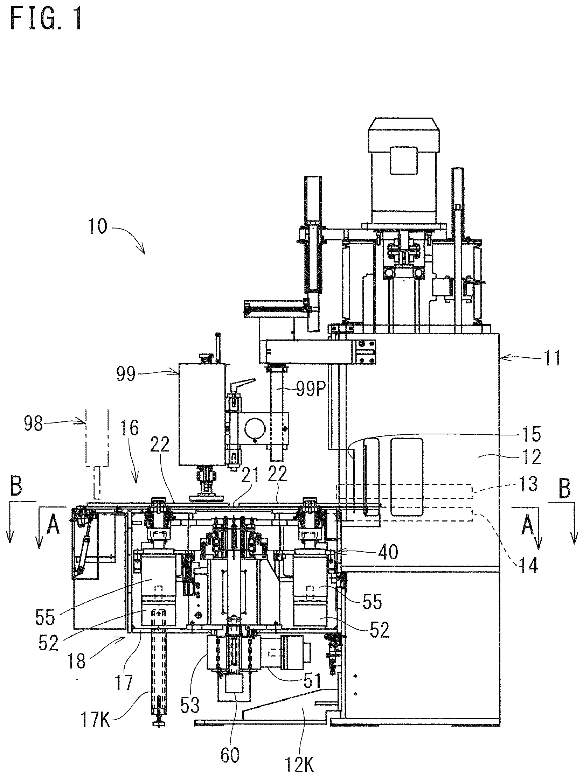

Hereinafter, a grinding apparatus 10 according to an embodiment of the present disclosure will be described with reference to FIGS. 1 to 12. As illustrated in FIG. 1, the grinding apparatus 10 of the present embodiment includes a workpiece transfer device 16 on a front face of a grinding apparatus main body 11.

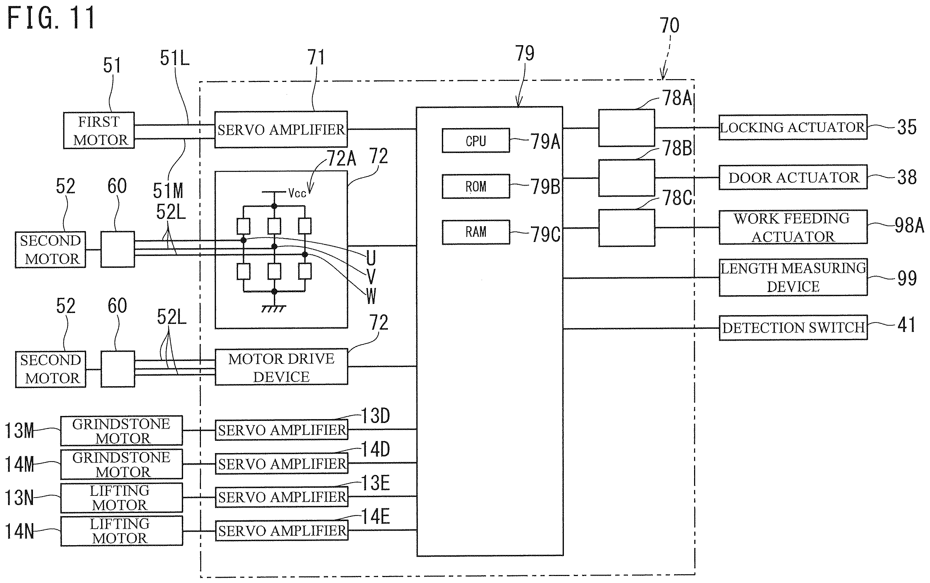

The grinding apparatus main body 11 has, for example: a main frame 12 having a vertically long housing structure; and a pair of rotary grindstones 13 and 14 disposed at a central part, in a vertical direction, of the main frame 12 so as to vertically face each other. The pair of rotary grindstones 13 and 14 both have, for example, a disk shape, and rotation axes of the rotary grindstones 13 and 14 are disposed substantially coaxially. Further, both the rotary grindstones 13 and 14 are rotationally driven by a pair of grindstone motors 13M and 14M (see FIG. 11), for example, in the same direction at the same rotation speed, and can be moved to any position in the vertical direction by lifting motors 13N and 14N (see FIG. 11). The grindstone motors 13M and 14M and the lifting motors 13N and 14N are servo motors and are connected to servo amplifiers 13D, 14D, 13E, and 14E of a controller 70 (see FIG. 11).

The rotary grindstones 13 and 14 may be rotationally driven in the same direction at different rotation speeds, or may be rotationally driven in opposite directions at the same rotation speed or different rotation speeds. Further, both the rotary grindstones 13 and 14 may be vertically movable, or only one of the rotary grindstones 13 and 14 (for example, the upper rotary grindstone 13) may be vertically movable.

A front opening 15 is formed at a central part in the vertical direction of a front face of the main frame 12, and the workpiece transfer device 16 is attached to a part, of the front face of the grinding apparatus main body 11, lower than the front opening 15. Hereinafter, the grinding apparatus main body 11 side of the workpiece transfer device 16 is referred to as a "rear side", and the opposite side of the rear side is referred to as a "front side".

The workpiece transfer device 16 has, for example: a fixed base 18 fixed to the main frame 12; and a rotary base 40 rotatably supported by the fixed base 18. The fixed base 18 includes a rectangular parallelepiped subframe 17. For example, the subframe 17 has a width substantially the same as that of the main frame 12, and is fixed at an intermediate position in the vertical direction on the front face of the main frame 12 and floats from the ground. In addition, at a front end part of the subframe 17, there are a pair of auxiliary legs 17K (only one auxiliary leg 17K is illustrated in FIG. 1) hanging down from the lower end parts of both sides and being in contact with the ground. An anti-tilt leg 12K projects forward from a lower end part of the front face of the main frame 12 and is in contact with the ground.

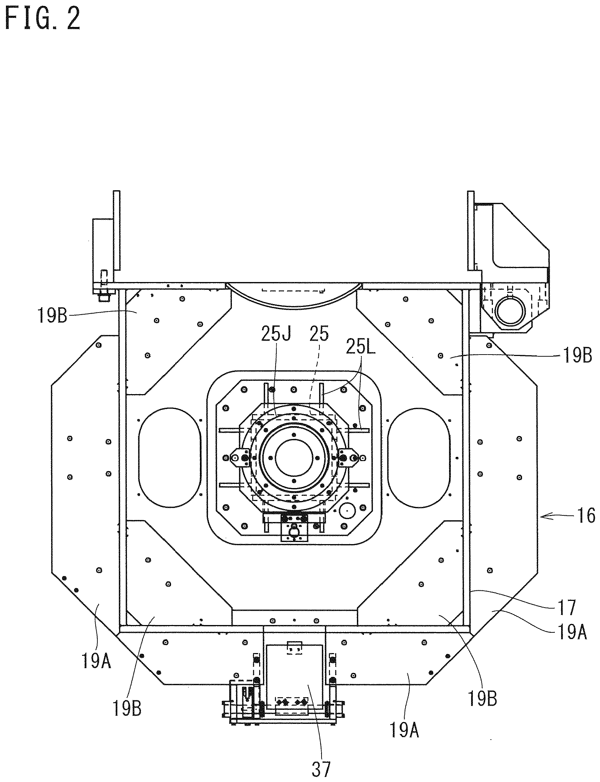

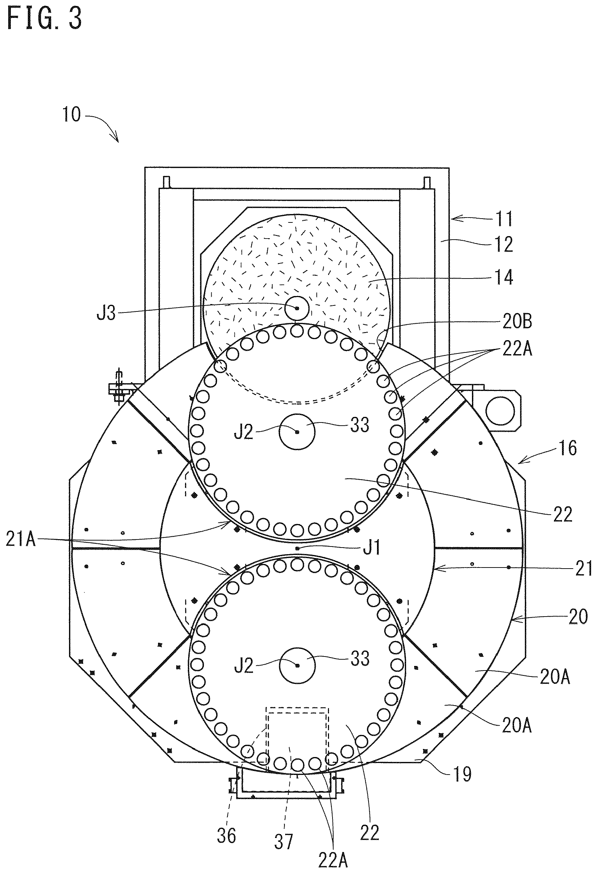

The subframe 17 has, for example, a substantially square shape in a plan view as illustrated in FIG. 2, and is open on the upper surface. Further, at an upper end part of the subframe 17, for example, a plurality of overhanging plates 19A project toward the front, right, and left sides from the outer side surfaces. In addition, a plurality of connection plates 19B are each bridged between upper end parts of the inner side surfaces that are adjacent to each other at four corners inside the subframe 17. Then, a fixed table 20 illustrated in FIG. 3 is overlappingly fixed on the overhanging plates 19A and the connection plates 19B.

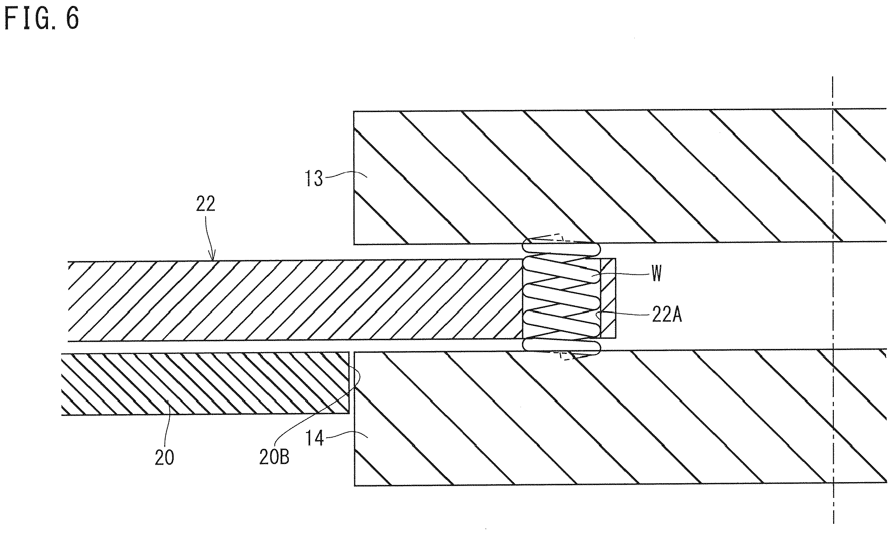

As illustrated in FIG. 3, the fixed table 20 is made up of, for example, a plurality of fan-shaped plates 20A annularly arranged side by side, and an arc-shaped cutout 20B on the grinding apparatus main body 11 side so as to avoid interference with the rotary grindstone 14. Further, as illustrated in FIG. 6, an inner surface of the cutout 20B faces an outer peripheral surface of the lower rotary grindstone 14 with a slight gap. A position of an upper surface of the rotary grindstone 14 is adjusted in the vertical direction such that the upper surface of the rotary grindstone 14 is flush with the upper surface of the fixed table 20.

The fixed table 20 does not have to be circular, and may be a polygon such as a quadrangle, a hexagon, or an octagon. The fixed table 20 may be made of a single plate.

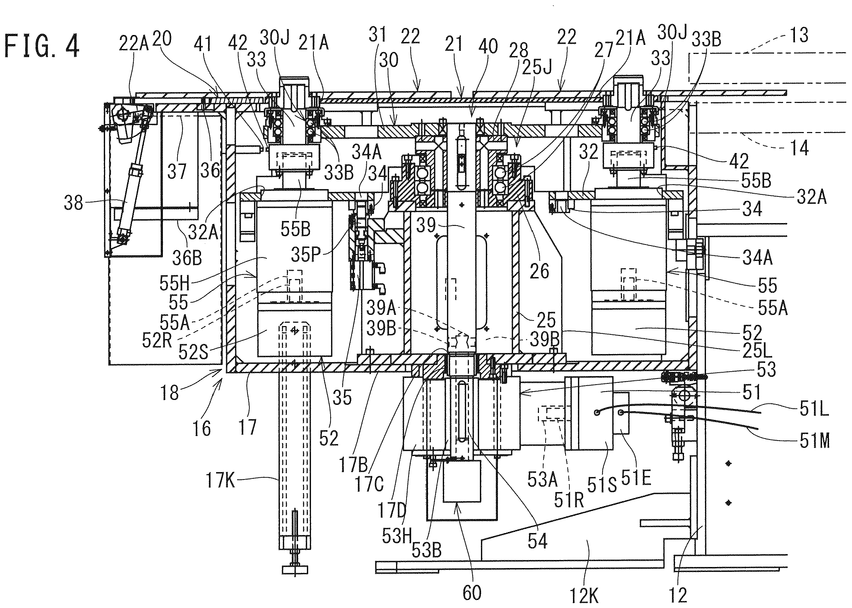

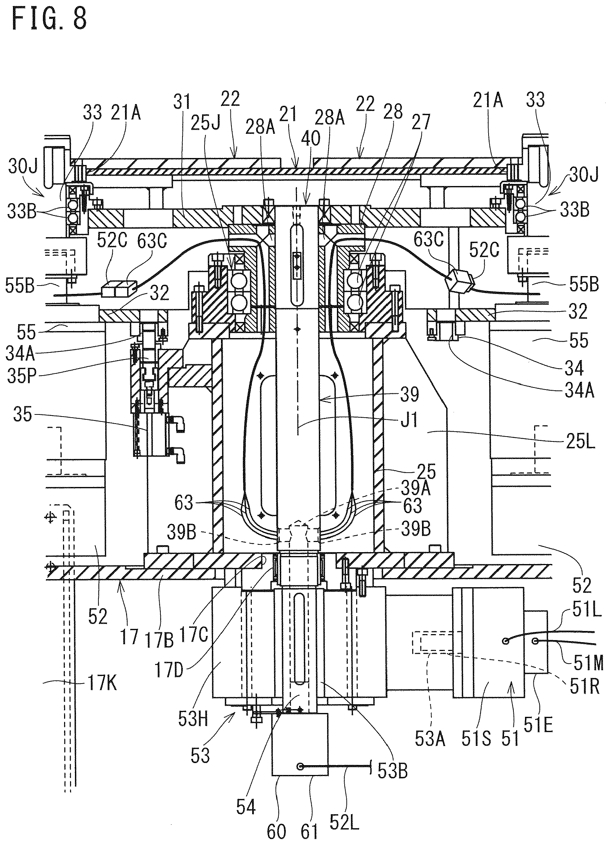

As illustrated in FIGS. 4 and 8, a support column 25 stands up from a central part of the bottom surface of the subframe 17. The support column 25 has, for example, a square cylindrical shape and has a plurality of reinforcing ribs 25L on the outer surface (see FIG. 2). The upper end part of the support column 25 is a rotary support 25J having a plurality of bearings 27 arranged one above another. The rotary base 40 is supported by the fixed base 18 via the bearings 27 so as to be rotatable but vertically immovable. Specifically, a rotary sleeve 28 included in the rotary base 40 is supported by the plurality of bearings 27 of the rotary support 25J, and a rotary frame 30 included in the rotary base 40 is fixed to an upper surface of the rotary sleeve 28.

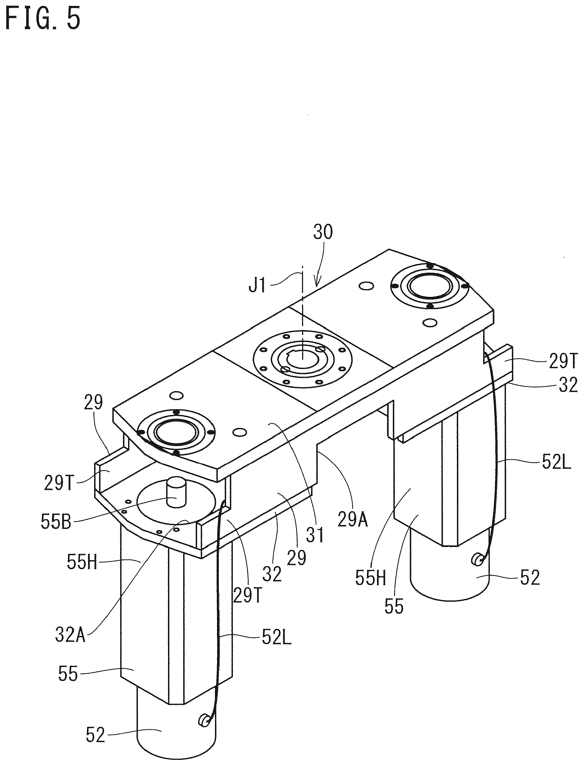

As illustrated in FIG. 5, the rotary frame 30 has, for example, a housing structure extending in a direction perpendicular to a first rotation axis J1 which is a central axis of the bearings 27. Specifically, the rotary frame 30 has the following structure: a pair of side walls 29 are suspended from both side edges of a horizontally extending upper strip plate 31; and a pair of lower strip plates 32 facing both end parts of the upper strip plate 31 from below are fixed to lower ends of the pair of side walls 29. Further, tip parts of the pair of lower strip plates 32 are disposed at positions more distant from the first rotation axis J1 than both ends of the upper strip plate 31 are, and, in correspondence to that, both end parts of the pair of side walls 29 are formed to have projecting pieces 29T in a step-shaped manner. Then, as illustrated in FIG. 8, the above-mentioned rotary sleeve 28 is fixed such that the upper surface thereof is overlapped with a lower surface of the central part of the upper strip plate 31. As illustrated in FIG. 5, at a central part of each of the pair of side walls 29, there is provided, for example, a cutout 29A to avoid interference with the rotary support 25J.

As illustrated in FIG. 4, an upper surface of the rotary frame 30 is located below the fixed table 20, and a rotary table 21 is fixed to the upper surface of the rotary frame 30. The rotary table 21 has, for example, a disk shape that is housed inside the fixed table 20 with a slight gap therebetween, and is disposed such that the upper surface of the fixed table 20 is flush with an upper surface of the rotary table 21.

As illustrated in FIGS. 4 and 8, on both end parts of the upper strip plate 31 of the rotary frame 30, there are provided a pair of rotary support portions 30J. In the same manner as the above-mentioned rotary support 25J, each rotary support 30J is configured as follows: a plurality of bearings 33B are provided one above another; and a table center member 33 is rotatably but vertically immovably supported on the bearings 33B. Further, a pair of rotary supports 21A are formed at positions, on the rotary table 21, facing the pair of rotary support portions 30J. In addition, the table center member 33 is rotatably supported by the bearings (not illustrated) in each rotary support 21A.

As illustrated in FIG. 3, each workpiece supporting table 22 has a disk shape, and a central part of the workpiece supporting table 22 is fixed to one of table center members 33. The workpiece supporting tables 22 are each disposed over the fixed table 20 and the rotary table 21 from above, and are slightly floating from the fixed table 20 and the rotary table 21. Further, when a second rotation axis J2, which is a rotation axis of each workpiece supporting table 22, is located between the first rotation axis J1, which is the rotation axis of the rotary table 21, and a third rotation axis J3, which is the rotation axis of the rotary grindstones 13 and 14, part of an outer edge part of the workpiece supporting table 22 is positioned between the rotary grindstones 13 and 14.

Each workpiece supporting table 22 is provided with a plurality of workpiece receiving holes 22A that vertically pass through the outer edge part of the workpiece supporting table 22. The plurality of workpiece receiving holes 22A each have a circular cross-section whose central axis is at a constant distance from the second rotation axis J2, and the workpiece receiving holes 22A are arranged at regular intervals. In this arrangement, as illustrated in FIG. 6, each workpiece receiving hole 22A houses a coil spring as a workpiece W, and both upper and lower ends of the workpiece W protrude upward and downward, respectively from the workpiece supporting table 22. In this state, the workpiece supporting table 22 rotates with part of the workpiece supporting table 22 disposed between the pair of rotary grindstones 13 and 14, so that a plurality of workpieces W pass through between the rotary grindstones 13 and 14, whereby both ends of the workpieces W are ground.

The rotary table 21 does not have to be circular as long as the rotary table 21 cooperates with the fixed table 20 and faces, from below, all the workpiece receiving holes 22A of the pair of workpiece supporting tables 22. Further, the workpiece supporting tables 22 do not have to be circular as long as each workpiece supporting table 22 has a plurality of workpiece receiving holes 22A in the outer edge part. Further, hereinafter, the workpiece supporting table 22 whose second rotation axis J2 is closest to the third rotation axis J3 is referred to as "the workpiece supporting table 22 at the grinding performing position", and the second motor 52 that is a drive source for such workpiece supporting table 22 is referred to as "the second motor 52 at the grinding performing position". Further, the workpiece supporting table 22 whose second rotation axis J2 is farthest from the third rotation axis J3 is referred to as "the workpiece supporting table 22 at the standby position", and the second motor 52 that is a drive source for such workpiece supporting table 22 is referred to as "the second motor 52 at the standby position". In the present embodiment, the standby position is a "workpiece discharge position" and, at the same time, a "workpiece feeding position" according to the present disclosure.

As illustrated in FIG. 1, for example, the grinding apparatus 10 includes a length measuring device 99 to detect whether an axial length of a workpiece W is a specified length. The length measuring device 99 is rotatably attached to a pole 99P fixed to the main frame 12 of the grinding apparatus main body 11 and is used, being disposed to face the outer edge part of the workpiece supporting table 22 at the grinding performing position. In this arrangement, a lower surface of the length measuring device 99 comes into contact with the upper end of the workpiece W in the workpiece receiving hole 22A to detect whether the workpiece W has the specified length, and when the workpiece W has the specified length, the workpiece supporting table 22 is separated away from between the rotary grindstones 13 and 14. Note that, if necessary, the length measuring device 99 can be disposed to face the outer edge part of the workpiece supporting table 22 at the standby position.

As illustrated in FIG. 3, for example, in an end part of the fixed table 20 that is farthest from the grinding apparatus main body 11, there is provided a discharge port 36. Further, part of the plurality of workpiece receiving holes 22A of the workpiece supporting table 22 at the standby position is located above the discharge port 36. The discharge port 36 is provided with a door member 37, and the door member 37 is rotationally moved, by a door actuator 38 illustrated in FIG. 4, around the front end part of the door member 37, whereby the discharge port 36 is switched between a closed state and an open state. With this arrangement, the workpiece supporting table 22 in which grinding of the workpiece W has been finished is moved from the grinding performing position to the standby position, and when the discharge port 36 is put in the open state and the workpiece supporting table 22 rotates, the workpieces W having been finished being ground are collected in a collection box 36B under the discharge port 36.

As illustrated in FIG. 1, a workpiece feeding device 98 is provided, for example, above the workpiece supporting table 22 at the standby position. The workpiece feeding device 98 includes, for example: a workpiece feeding port that faces, from immediately above and at a position deviated from the discharge port 36, one workpiece receiving hole 22A of the workpiece supporting table 22 at the standby position; and a workpiece feeding actuator 98A (see FIG. 11) to discharge workpieces W one by one from the workpiece feeding port. The workpiece feeding actuator 98A is controlled and driven by the controller 70 to be described later.

As illustrated in FIG. 8, the rotary base 40 is provided with a center shaft 39 extending in the vertical direction with the first rotation axis J1 as a central axis. An upper end part of the center shaft 39 passes through the rotary sleeve 28 and is fixed to the upper strip plate 31 of the rotary frame 30. Further, a lower end part of the center shaft 39 is rotatably supported by a bearing 17D in a through-hole 17C formed in a bottom wall 17B of the subframe 17. To the lower end part of the center shaft 39, a first motor 51 is connected via a first speed reducer 53.

The first speed reducer 53 includes, for example: a cylindrical output shaft portion 53B that rotates, around the first rotation axis J1, with respect to a speed reducer main body 53H fixed to a lower surface of the subframe 17; and an input shaft portion 53A that rotates around a rotation axis parallel to the horizontal direction. A stator 51S of the first motor 51 is fixed to the speed reducer main body 53H, and a rotor 51R of the first motor 51 is integrally rotatably connected to the input shaft portion 53A. A conductive path support sleeve 54 is fitted inside the output shaft portion 53B of the first speed reducer 53 so as to be integrally rotatably connected, and an upper end part of the conductive path support sleeve 54 is integrally rotatably connected to the lower end part of the center shaft 39. With this arrangement, the center shaft 39 and the first motor 51 are connected to each other via the first speed reducer 53, as described above.

The first motor 51 is, for example, a three-phase alternating-current induction motor including a rotational position sensor 51E (for example, a resolver or an absolute encoder) that detects a rotational position of the rotor 51R. From the stator 51S, there extend a power cable 51L including a U-phase, V-phase, and W-phase and a plurality of signal cables 51M for the rotational position sensor 51E. The power cable 51L and the signal cables 51M are connected to a common servo amplifier 71 of the controller 70 illustrated in FIG. 11. Then, a rotational position, a rotation speed, and a rotational acceleration of the first motor 51 are controlled by a common control configuration, while feeding back a detection result of the rotational position sensor 51E.

Further, although the first motor 51 can hold any one of the workpiece supporting tables 22 at the grinding performing position; however, in order to reduce a load on the first motor 51, a locking mechanism is provided between the rotary base 40 and the fixed base 18, and the locking mechanism locks the rotary base 40 to a non-rotatable state with respect to the fixed base 18 when any one of the workpiece supporting tables 22 is disposed at the grinding performing position. As illustrated in FIG. 8, the locking mechanism includes, for example: a locking actuator 35 mounted on a side surface, of the support column 25, facing the side opposite to the grinding apparatus main body 11; and positioning holes 34A that vertically pass through the pair of lower strip plates 32. In this arrangement, when any one of the workpiece supporting tables 22 is positioned at the grinding performing position by the first motor 51, a plunger 35P of the locking actuator 35 moves from a lower end position to an upper end position in a movable range to engage with the positioning hole 34A in a concavo-convex manner, so that the rotary base 40 is locked to a non-rotatable state. When the plunger 35P moves to the lower end position in the movable range, the rotary base 40 is unlocked.

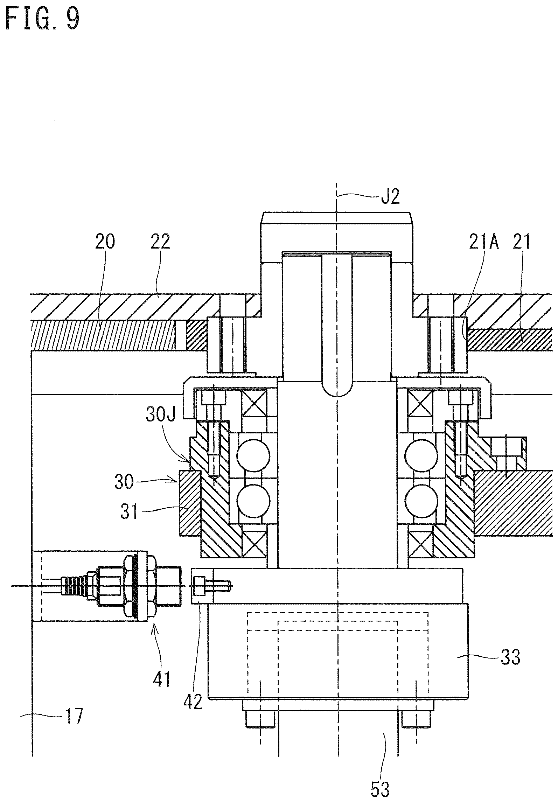

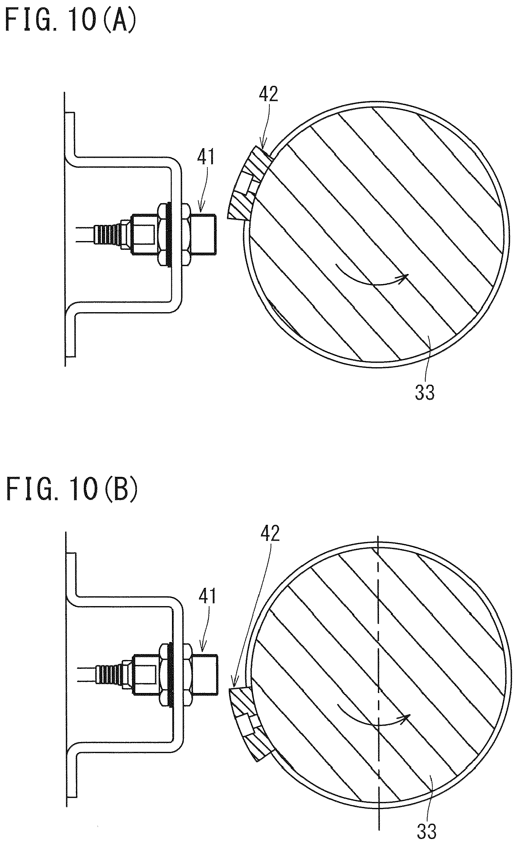

As illustrated in FIGS. 4 and 9, in order to specify a current rotational position of each workpiece supporting table 22, a detection switch 41 (specifically, a proximity switch) is attached to, for example, an upper part of a front inner surface of the subframe 17. Further, as illustrated in FIG. 10A, a specific shape portion 42 is provided on part of an outer peripheral surface of each of the pair of table center members 33, in correspondence to the detection switch 41 (note that the table center member 33 including the specific shape portion 42 corresponds to a "detection target rotary body" of the present disclosure). In this arrangement, a detection surface of the detection switch 41 faces an outer circumferential surface of the table center member 33 of the workpiece supporting table 22 at the standby position, and the detection switch 41 and the specific shape portion 42 come in proximity with each other during one turn of the workpiece supporting table 22, so that the detection switch 41 is turned on and off. Specifically, as illustrated in FIG. 10A, the specific shape portion 42 has, for example, a fan shape in a plan view, and when the table center member 33 rotates in one direction together with the workpiece supporting table 22 and the specific shape portion 42 comes close to the detection switch 41 from one lateral direction, an output of the detection switch 41 is switched from an off state to an on state, the on state is maintained while the table center member 33 turns a certain angle, and then the output is switched to the off state. On the basis of these, the current rotational position of the workpiece supporting table 22 is specified as described later.

As illustrated in FIGS. 4 and 5, the pair of second motors 52, which are the drive sources of the pair of workpiece supporting tables 22, are attached to the rotary base 40. Specifically, in the pair of lower strip plates 32 of the rotary frame 30 included in the rotary base 40, a pair of through-holes 32A are formed coaxially below the above-described pair of rotary support portions 30J. Upper parts of the speed reducer main bodies 55H of the pair of second speed reducers 55 are fitted in the pair of through-holes 32A, so that the speed reducer main bodies 55H are fixed to the rotary frame 30, and output shaft portions 55B of the pair of second speed reducers 55 are integrally rotatably connected to the pair of table center members 33. Further, the stators 52S of the pair of second motors 52 are fixed to lower end surfaces of the pair of speed reducer main bodies 55H, and the rotors 52R of the pair of second motors 52 are integrally rotatably attached to input shaft portions 55A of the second speed reducers 55. As a result, the pair of second motors 52 are connected to the pair of workpiece supporting tables 22 via the second speed reducers 55.

Each of the pair of second motors 52 is, for example, a so-called sensor-less three-phase alternating-current induction motor that has no rotational position sensor for detecting a rotational position of the rotor 52R, and only a power cable 52L (see FIG. 5) including a U-phase, V-phase, and W-phase extends from the stator 52S. As illustrated in FIG. 8, the power cables 52L of the pair of second motors 52 are connected to a pair of motor drive devices 72 of the controller 70 illustrated in FIG. 11 via a slip ring 60.

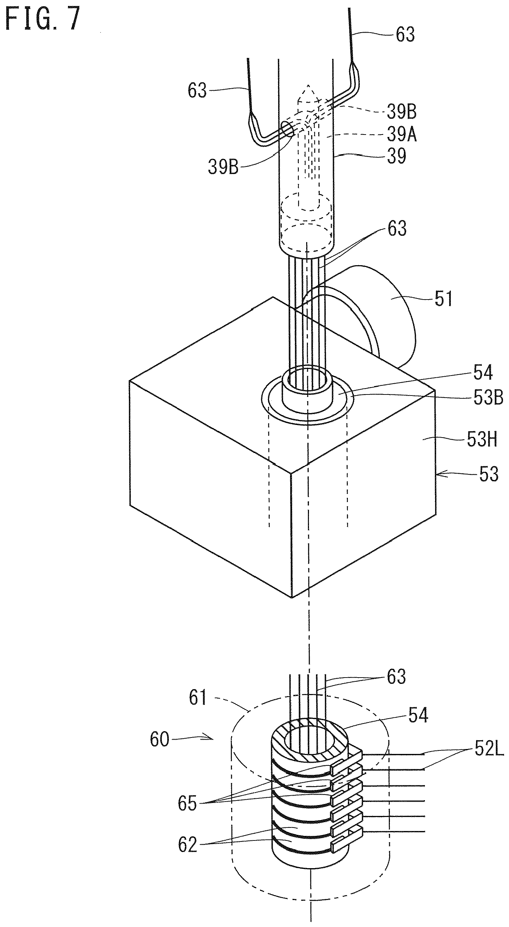

As illustrated in FIGS. 7 and 8, the slip ring 60 has, for example, the above-mentioned conductive path support sleeve 54 and a cover 61 surrounding a lower part of the conductive path support sleeve 54. The lower part of the conductive path support sleeve 54 projects downward from the speed reducer main body 53H of the first speed reducer 53, and a plurality of (for example, six) conductive rings 62 are provided separately from each other on an outer circumferential surface of the conductive path support sleeve 54. Further, connection pieces (not illustrated) extend from the conductive rings 62, pass through the conductive path support sleeve 54, and are exposed inside the conductive path support sleeve 54, and a plurality of relay cables 63 connected to the connecting pieces extend upward in the conductive path support sleeve 54.

A lower part of the center shaft 39 includes, for example, a communication passage 39A communicating with the inside of the conductive path support sleeve 54, and an upper end of the communication passage 39A is bifurcated and opened, as a pair of side surface openings 39B, on a side surface of the center shaft 39. As illustrated in FIG. 8, the plurality of relay cables 63 are then bundled into two sets and pulled out from the pair of side surface openings 39B, are extended upward along an outer surface of the center shaft 39, are put through a pair of cable insertion holes 28A formed in the rotary sleeve 28, and are stretched above the pair of lower strip plates 32. On an end of each set of relay cables 63, a connector 63C is provided, and coupled to a connector 52C at an end of the power cable 52L of each of the second motors 52.

Further, the cover 61 of the slip ring 60 is fixed to the speed reducer main body 53H of the first speed reducer 53, and inside the cover 61, there are provided a plurality of brushes 65 in sliding contact with the plurality of conductive rings 62 as illustrated in FIG. 7. Further, cables connected to the plurality of brushes 65 are connected to the motor drive devices 72 of the controller 70, as the power cables 52L of the second motor 52 (see FIG. 11). That is, as described above, the pair of second motors 52 are connected to the motor drive devices 72 of the controller 70 via the slip rings 60.

As illustrated in FIG. 11, the controller 70 includes a main control circuit 79 having a central processing unit (CPU) 79A, a read-only memory (ROM) 79B, and a random-access memory (RAM) 79C. To the main control circuit 79 are connected the servo amplifiers 13D, 14D, 13E, and 14E for respective ones of servomotors of the grinding apparatus main body 11, the servo amplifier 71 for the first motor 51 and the motor drive devices 72 for the second motors 52 of the workpiece transfer device 16. The motor drive devices 72 each further include an inverter circuit 72A that generates a three-phase alternating current, similarly to a servo amplifier for a common three-phase alternating-current induction motor. To the main control circuit 79 are further connected: drive circuits 78A, 78B, and 78C for respectively driving the locking actuator 35, the door actuator 38, and the workpiece feeding actuator 98A; the length measuring device 99; and the detection switch 41.

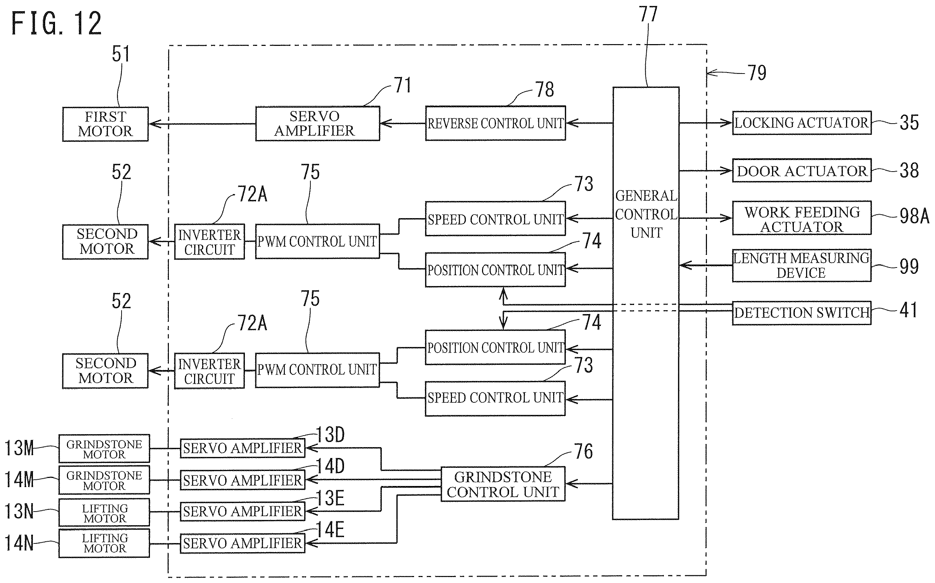

By the CPU 79A executing a plurality of control programs stored in the ROM 79B by multitask processing, the controller 70 is configured to have control blocks such as speed control units 73, position control units 74, pulse-width modulation (PWM) control units 75, a grindstone control unit 76, a general control unit 77, and a reverse control unit 78 illustrated in FIG. 12. Hereinafter, the control block illustrated in FIG. 12 will be described together with an operation in which the grinding apparatus 10 grinds a plurality of workpieces W.

When the grinding apparatus 10 is stopped, the locking actuator 35 locks the rotary base 40 in a non-rotatable state with respect to the fixed base 18. When the grinding apparatus 10 is activated, the general control unit 77 gives a command to the grindstone control unit 76 to rotate the grindstone motors 13M and 14M at a constant rotation speed, and the grinding apparatus 10 performs a workpiece feeding process.

In the workpiece feeding process, the general control unit 77 gives a workpiece feeding positioning command to the position control unit 74 related to the second motor 52 at the standby position. The position control unit 74 related to each second motor 52 executes the following reference point specifying process only when receiving the workpiece feeding positioning command for the first time immediately after the grinding apparatus 10 is activated.

In the reference point specifying process, the position control unit 74 gives a command to the PWM control unit 75 to cause the inverter circuit 72A to generate a predetermined low frequency three-phase alternating current, and energizes the second motor 52. Then, while the three-phase alternating current is supplied for one cycle, a phase of the three-phase alternating current matches a current electric angle of the rotor 52R of the second motor 52, and the rotor 52R is therefore activated, so that the rotor 52R rotates at a rotation speed corresponding to a frequency of the three-phase alternating current for the rotor 52R. During such a moment, the position control unit 74 captures a detection signal of the detection switch 41. Here, the detection signal of the detection switch 41 is turned on when the specific shape portion 42 comes close to the detection switch 41 as illustrated in FIG. 10A, and the detection signal of the detection switch 41 is turned off when the specific shape portion 42 separates away from the detection switch 41 as illustrated in FIG. 10B. The position control unit 74 specifies a rotation direction of the second motor 52 on the basis of the detection signal of the detection switch 41, and specifies, for example, a central position in the width direction of the specific shape portion 42 as a reference point around the second rotation axis J2 of the workpiece supporting table 22. As a result, the position of the workpiece supporting table 22 can be controlled by the position control unit 74. As described above, the reference point specifying process is completed.

When the reference point specifying process is completed, the position control unit 74 stops the workpiece supporting table 22 in a state where the reference point of the workpiece supporting table 22 is made to coincide with an origin position (for example, the center position of the detection switch 41) previously determined on the rotary support 30J. That is, the workpiece supporting table 22 is positioned at the origin position. In the grinding apparatus 10 of the present embodiment, when the workpiece supporting table 22 is positioned at the origin position, one of the plurality of workpiece receiving holes 22A is located directly under the workpiece feeding port of the workpiece feeding device 98. Otherwise, the workpiece supporting table 22 is positioned by being rotated to such a position.

When any of the workpiece receiving holes 22A is in a workpiece feed waiting state where the workpiece receiving hole 22A is located directly under the workpiece feeding port of the workpiece feeding device 98 as described above, the position control unit 74 notifies the general control unit 77 of the situation. Then, the general control unit 77 drives the workpiece feeding actuator 98A to discharge one workpiece W from the workpiece feeding device 98, puts the workpiece W in the workpiece receiving hole 22A, and gives a command to the position control unit 74 to position the next workpiece receiving hole 22A directly under the workpiece feeding port of the workpiece feeding device 98.

Then, the position control unit 74 rotates the workpiece supporting table 22 by a constant angle to put the workpiece supporting table 22 in the workpiece feed waiting state, and notifies the general control unit 77 that the next workpiece supporting table 22 is in the workpiece feed waiting state. Hereinafter, this operation is repeated until all the workpiece receiving holes 22A are filled with workpieces W, and when the workpiece receiving holes 22A are all filled with workpieces W, the general control unit 77 does not give any more command to the position control unit 74, and, as a result, the workpiece feeding process is completed

When the workpiece feeding process is completed, a rotation drive command is given to the speed control unit 73 related to the second motor 52 at the standby position, and a reverse command is given to the reverse control unit 78 related to the first motor 51. Then, the speed control unit 73 causes the PWM control unit 75 to gradually increase a frequency of the three-phase alternating current applied to the second motor 52 from the inverter circuit 72A, and then to hold the frequency at a predetermined constant frequency. As a result, the workpiece supporting table 22 is rotated at a constant rotation speed.

Further, the reverse control unit 78 drives the locking actuator 35 to release the locking of the rotary base 40. Then, the reverse control unit 78 performs a position control and a speed control of the first motor 51 to exchange the positions of the pair of workpiece supporting tables 22, and then causes the locking actuator 35 to lock the rotary base 40. As a result, one of the workpiece supporting tables 22 filled with workpieces W is disposed at the grinding performing position while being rotated, and the workpieces W pass through between the pair of rotary grindstones 13 and 14, thereby being ground.

While the plurality of workpieces W on the one of the workpiece supporting tables 22 are being ground, the general control unit 77 gives the above-described workpiece feeding positioning command and the like to the position control unit 74 related to the second motor 52 newly disposed at the standby position, so that also the plurality of workpiece receiving holes 22A of the workpiece supporting table 22 are filled with workpieces W. Then, when the detection result of the length measuring device 99 reaches a predetermined specified length, the general control unit 77 gives the rotation drive command to the speed control unit 73 related to the second motor 52 at the standby position, and, at the same time, the general control unit 77 gives the reverse command to the reverse control unit 78 related to the first motor 51. Then, the general control unit 77 performs the workpiece discharging process and thereafter performs the above-described workpiece feeding process.

In the workpiece discharging process, the general control unit 77 gives a workpiece discharge positioning command to the position control unit 74. After receiving the workpiece discharge positioning command, the position control unit 74 performs the above-mentioned reference point specifying process, and then positions the workpiece supporting table 22 at the origin position. By this operation, as illustrated in FIG. 3, some (for example, three) of the workpiece receiving holes 22A of all the workpiece receiving holes 22A of the workpiece supporting table 22 are located above the discharge port 36. Otherwise, the workpiece supporting table 22 is positioned by being rotated to such a position.

Then, the general control unit 77 causes the door actuator 38 to drive the door member 37 so as to put the discharge port 36 in an open state, and the general control unit 77 then gives a workpiece discharge command to the position control unit 74. Then, the position control unit 74 keeps stopping state of the workpiece supporting table 22 while waiting until a discharge time, which is previously obtained by actual measurement, required for the workpieces W to fall out from the workpiece receiving holes 22A elapses, and then the position control unit 74 rotates the workpiece supporting table 22 by a constant angle and stops the workpiece supporting table 22 so that the next some of the plurality of workpiece receiving holes 22A are located above the discharge port 36.

By repeating this operation, the workpieces W are discharged from the plurality of workpiece receiving holes 22A and collected in the collection box 36B (see FIG. 4). Then, after making one turn of the workpiece supporting table 22, the position control unit 74 notifies the general control unit 77 that the workpiece discharging process is completed. In response to the notification, the general control unit 77 causes the door actuator 38 to drive the door member 37 so as to return the discharge port 36 to the closed state, and then performs the above-described workpiece feeding process. Then, when the detection result of the length measuring device 99 reaches the specified length, the general control unit 77 gives the above-described reverse command to the reverse control unit 78 and performs another operation to exchange the pair of workpiece supporting tables 22.

As described above, the grinding apparatus 10 of the present embodiment operates to grind a plurality of workpieces W. Unlike a conventional grinding apparatus in which a pair of second motors 52 for performing the above operation are fixed to the rotary base 40 and those components are fixed to the fixed base 18, the grinding apparatus 10 of the present embodiment does not need a plurality of gears, and the production cost can be reduced. Further, since the pair of second motors 52 and the controller 70 are electrically connected through the slip ring 60, the rotation of the rotary base 40 is not restricted by the power cables 52L of the second motors 52. Further, the slip ring 60 may be arranged above the first speed reducer 53 connected to the first motor 51, but since the slip ring 60 is located below the first speed reducer 53, an inside of a turning region of the pair of second motors 52 is slim, and the grinding apparatus 10 can be downsized. In addition, since the pair of second motors 52 have no rotational position sensor, the number of conductive lines is small, and the slip ring 60 itself is small.

Further, the second motors 52 may be direct-current motors; however, because alternating-current motors have no brushes, when alternating-current motors are used, the second motors 52 can be accordingly downsized. In addition, the rotation speed can be easily changed by changing the frequency of the alternating current applied to the second motor 52, and it is therefore easy to adjust a grinding amount of the workpiece W. Further, since the second motors 52 are alternating-current motors, it is also possible to rotate each workpiece supporting table 22 by an any desired angle, and it is also possible to stop each workpiece supporting table 22 at an any desired position. In addition, the detection switch 41 fixed to the fixed base 18 specifies the origin position with respect to the rotation of the workpiece supporting table 22, depending on whether the detection switch 41 faces the specific shape portion 42 that integrally rotates with the workpiece supporting table 22, and the workpiece supporting table 22 is rotated and stopped with the origin position taken as a reference. Therefore, an accuracy of position control is improved, and it is possible to accordingly stably perform the discharge of workpieces W from the workpiece receiving holes 22A to the discharge port 36 and to feed workpieces W in the workpiece receiving holes 22A.

### Other Embodiments

(1) The grinding apparatus 10 of the above embodiment has no gear, but as long as the pair of second motors 52 are fixed to the rotary base 40, the grinding apparatus 10 may have a gear. The reason is as follows. When the pair of second motors 52 are fixed to the rotary base 40 as in the grinding apparatus 10 of the present embodiment, even though the number of gears is not zero, the number can be reduced as compared with the conventional grinding apparatus. Therefore, the manufacturing cost can be accordingly reduced. Specifically, the input shaft portion 55A of the second speed reducer 55 and the rotor 52R of the second motor 52 may be gear-connected to each other. Further, the output shaft portion 53B of the first speed reducer 53 may be offset from the first rotation axis J1, and the output shaft portion 53B and the conductive path support sleeve 54 may be gear-connected to each other.

(2) In the grinding apparatus 10 of the above embodiment, the first motor 51 is a common alternating-current motor having the rotational position sensor 51E, but the first motor 51 may also be an alternating-current motor having no rotational position sensor in the same manner as the second motors 52.

(3) The second motors 52 are alternating-current motors, but may be direct-current motors. In that case, the relationship between a current value of a current to the second motor 52 and the rotation speed of the second motor 52 is obtained by actual measurement and is stored as a map, and the map may be used to control the current to the second motor 52 so as to rotate the second motor 52 at a desired rotation speed.

(4) The detection switch 41 of the above embodiment is a proximity switch, but may be an optical sensor, a magnetic sensor, or the like. The detection switch may be a contact type switch.

(5) The specific shape portion 42 protrudes from one place in the circumferential direction of the table center member 33 as the "detection target rotary body" of the present disclosure, but one place in the circumferential direction of the table center member 33 may be depressed as the specific shape portion 42. Further, it is possible to provide an auxiliary detection rotary body that integrally rotates with the workpiece supporting table 22 and has a plurality of concavo-convexes at a plurality of positions in the circumferential direction such that the auxiliary detection rotary body faces an auxiliary detection switch which is different from the detection switch 41. Then, output of the auxiliary detection switch may be made to depend on where on the concavo-convexes of the auxiliary detection rotary body the auxiliary detection switch faces. With that arrangement, the output of the auxiliary detection switch may be used to detect a rotation amount of the workpiece supporting table 22 from the origin position, and the rotation amount may be used to control the position of the workpiece supporting table 22.

(6) In the above embodiment, each of the pair of second motors 52 includes no rotational position sensor for detecting the rotational position of the rotor 52R, but the second motor 52 may include a rotational position sensor.

(7) In the above embodiment, the slip ring 60 is disposed below the second motors 52, but the slip ring 60 may be disposed, for example, above or laterally to the second motors 52 (specifically, on an upper surface or a lower surface of the upper strip plate 31 of the rotary frame 30). Alternatively, in the case where the slip ring 60 is disposed below the second motors 52, the slip ring 60 may be disposed, for example, above the first speed reducer 53, the first motor 51, or the like, instead of below the first speed reducer 53 connected to the first motor 51.

(8) The slip ring 60 may be configured such that a plurality of conductive rings 62 are arranged side by side along the axial direction of the rings, or a plurality of conductive rings 62 are arranged concentrically in the radial direction of the rings. Further, the sliding contact positions of the brushes 65 to the conductive rings 62 are not limited to the outer peripheral surfaces of the conductive rings 62, and may be any side surfaces such as inner peripheral surfaces, upper end surfaces, or lower end surfaces.

(9) In the above embodiment, the conduction rings 62 of the slip ring 60 are connected to the second motor 52 side, and the brushes 65 are connected to the controller 70 side; however, the conductive rings 62 may be connected to any side.

(10) In the above embodiment, the input shaft portion 53A of the first speed reducer 53 is perpendicular to the first rotation axis J1, but for example, the input shaft portion 53A of the first speed reducer 53 may be offset with respect to the first rotation axis J1.

(11) The number of the workpiece supporting tables 22 is not limited to two, and may be three or more. Further, a plurality of workpiece supporting tables 22 may be arranged at equal intervals with respect to the first rotation axis J1, or may be arranged in any way.

Although the present specification and the drawings disclose specific examples of the techniques included in the claims, the techniques according to the claims are not limited to these specific examples, and include various variations and modifications of the specific examples and, in addition, include a part alone taken out from the specific examples.

## Claims

1. A grinding apparatus (10) that grinds an upper end and a lower end of a workpiece (W), the grinding apparatus (10) comprising:
a pair of rotary grindstones (13, 14) facing each other in a vertical direction, wherein the workpiece (W) is made to pass through between the pair of rotary grindstones (13, 14), and the upper end and the lower end of the workpiece (W) are ground;
a rotary base (40) that is rotationally driven around a first rotation axis (J1) parallel to the vertical direction;
a rotary table (21) included in the rotary base (40) and having an upper surface flush with an upper surface of a lower grindstone (14) of the pair of rotary grindstones (13, 14);
a fixed base (18) that rotatably supports the rotary base (40);
a fixed table (20) that is included in the fixed base (18), surrounds the rotary table (21), has a cutout (20B) receiving part of the lower rotary grindstone (14), and has an upper surface flush with the upper surface of the lower rotary grindstone (14);
a plurality of workpiece supporting tables (22) supported at a plurality of positions, around the first rotation axis (J1), on the rotary base (40) and each of which being rotationally driven around a center that is one of a plurality of second rotation axes (J2) parallel to the first rotation axis (J1), wherein when the center of one of the workpiece supporting tables (22) is positioned between the first rotation axis (J1) and the pair of rotary grindstones (13, 14), part of an outer edge part of the one of the workpiece supporting tables (22) is disposed between the pair of rotary grindstones (13, 14);
a plurality of workpiece receiving holes (22A) vertically passing through the outer edge part of each of the workpiece supporting tables (22), each workpiece receiving hole (22A) configured to receive a middle part, in the vertical direction, of one of a plurality of the workpieces (W);
a first motor (51) fixed to the fixed base (18) to rotationally drive the rotary table (21) and having a rotational position sensor;
a plurality of second motors (52) fixed to the rotary base (40) to rotationally drive the workpiece supporting tables (22), and having no rotational position sensor;
a controller (70) that drives the first motor (51) and the plurality of second motors (52); and
a slip ring (60) that is disposed below the plurality of second motors (52) and has a plurality of blushes (65) and a plurality of conductive rings (62) that are respectively fixed to the rotary base (40) and the fixed base (18) or respectively fixed to the fixed base (18) and the rotary base (40) and are in sliding contact with each other, the slip ring (60) conductively connecting between the controller (70) and the plurality of second motors (52) .

2. The grinding apparatus (10) according to claim 1, wherein each of the plurality of second motors (52) is an alternating-current motor,
the controller (70) includes a speed control unit (73) that controls a rotation speed of the workpiece supporting table (22) by the second motor (52) while the part of the outer edge part of the workpiece supporting table (22) is disposed between the pair of rotary grindstones (13, 14).

3. The grinding apparatus (10) according to claim 1 or 2, wherein each of the plurality of second motors (52) is an alternating-current motor, the grinding apparatus (10) further comprising:
a discharge port (36) that is provided in the fixed table (20), faces part of an outer edge part of the workpiece supporting table (22) at a workpiece discharge position that is away from the pair of rotary grindstones (13, 14), and receives workpieces (W) from the plurality of workpiece receiving holes (22A);
a door member (37) that opens and closes the discharge port (36);
a door actuator (38) that drives the door member (37) to switch the discharge port (36) between an open state and a closed state; and
a position control unit (74) that controls the second motor (52) for the workpiece supporting table (22) at the workpiece discharge position such that the workpiece supporting table (22) at the workpiece discharge position is repeatedly rotated by a constant angle and such that some of the plurality of workpiece receiving holes (22A) are stopped to be positioned above the discharge port (36) in the open state at every stopping of the workpiece receiving holes (22A).

4. The grinding apparatus (10) according to claim 3, further comprising:
a detection target rotary body (33) that is provided on each of the workpiece supporting tables (22), integrally rotates with the each of the workpiece supporting tables (22), and has a different shape depending on a position around the second rotation axis (J2) of the each of the workpiece supporting tables (22); and
a detection switch (41) that is fixed to the fixed base (18), faces part of the detection target rotary body (33) of the workpiece supporting table (22) at the workpiece discharge position, and detects whether the part that the detection switch faces is a specific shape portion (42) provided on the detection target rotary body (33),
wherein the position control unit (74) repeatedly rotates, by a constant angle, and stops the workpiece supporting table (22) at the workpiece discharge position, taking an origin position as a reference specified based on a detection result of the detection switch (41).

5. The grinding apparatus (10) according to claim 4, further comprising a workpiece feeding device (98) that faces one of the plurality of workpiece receiving holes (22A) of the workpiece supporting table (22) at the workpiece discharge position and discharges one workpiece (W) downward for the one of the plurality of workpiece receiving holes (22A),
wherein the position control unit (74) repeatedly rotates, by a constant angle, and stops the workpiece supporting table (22) at the workpiece discharge position, taking the origin position as a reference, such that the workpiece receiving holes (22A) one by one move to and stop at a position directly under the workpiece feeding device (98) when the discharge port (36) is in the closed state.

6. The grinding apparatus (10) according to any one of claims 1 to 3, wherein each of the plurality of second motors (52) is an alternating-current motor, the grinding apparatus (10) further comprising:
a workpiece feeding device (98) that faces, from above, one of the plurality of workpiece receiving holes (22A) of the workpiece supporting table (22) located at a workpiece feeding position apart from between the pair of rotary grindstones (13, 14) and discharges one workpiece (W) downward for the one of the plurality of receiving holes (22A);
a detection target rotary body (33) that is provided on each of the workpiece supporting tables (22), integrally rotates with the each of the workpiece supporting tables (22), and has a different shape depending on a position around the second rotation axis (J2) of the each of the workpiece supporting tables (22);
a detection switch (41) that is fixed to the fixed base (18), faces part of the detection target rotary body (33) of the workpiece supporting table (22) at the workpiece feeding position, and detects whether the part that the detection switch (41) faces is a specific shape portion (42) provided on the each of the detection target rotary bodies (33); and
a position control unit (74) that repeatedly rotates, by a constant angle, and stops the workpiece supporting table (22) at the workpiece feeding position, taking an origin position as a reference specified based on a detection result of the detection switch (41) such that the workpiece receiving holes (22A) one by one, move to and stop at a position directly under the workpiece feeding device (98).

7. The grinding apparatus (10) according to any one of claims 1 to 5, further comprising:
a first speed reducer (53) including:
an output shaft portion (53B) having a cylindrical shape whose central axis is the first rotation axis (J1); and
an input shaft portion (53A) which has a central axis perpendicular to or offset with respect to the first rotation axis (J1) and to which a rotor (51R) of the first motor (51) is connected;
a conductive path support sleeve (54) provided on the slip ring (60) and extends downward from the output shaft portion (53B) of the first speed reducer (53), and including the plurality of conductive rings (62) on an outer circumferential surface of the conductive path support sleeve (54);
a center shaft (39) extending along the first rotation axis (J1) and connecting between the output shaft portion (53B) of the first speed reducer (53) and the rotary table (21);
a cable insertion portion (39A, 39B) formed in the center shaft (39), the cable insertion portion (39A, 39B) having:
a lower end part communicating with an inside of the output shaft portion (53B) of the first speed reducer (53); and
an upper end part opened on an outer side surface of the center shaft (39); and
a plurality of relay cables (63), one end parts of the plurality of relay cables (63) being connected to the plurality of conductive rings (62) from an inside of the conductive path support sleeve (54), the plurality of relay cables (63) passing through the inside of the output shaft portion (53B) of the first speed reducer (53) and an inside of the cable insertion portion (39A, 39B) and extending sideward from the center shaft (39), and other end parts of the plurality of relay cables (63) being connected to the plurality of second motors (52).
